(19) **Europäisches Patentamt / European Patent Office / Office européen des brevets**

(11) **EP 4 405 137 B1**

(12) # EUROPEAN PATENT SPECIFICATION

(45) Date of publication and mention
of the grant of the patent:
**18.02.2026 Bulletin 2026/08**

(51) International Patent Classification (IPC):
**B25J 9/10** (2006.01)   **B25J 9/14** (2006.01)
**F15B 15/10** (2006.01)   **B33Y 80/00** (2015.01)

(21) Application number: **22793461.9**

(22) Date of filing: **22.09.2022**

(52) Cooperative Patent Classification (CPC):
**B25J 9/1075; B25J 9/142; B33Y 80/00;
F15B 15/103**

(86) International application number:
**PCT/IB2022/058957**

(87) International publication number:
**WO 2023/047322 (30.03.2023 Gazette 2023/13)**

(54) **FLUIDIC ARTIFICIAL MUSCLE DEVICE**

FLUIDISCHE KÜNSTLICHE MUSKELVORRICHTUNG

DISPOSITIF DE MUSCLE ARTIFICIEL FLUIDIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2021 IT 202100024356**

(43) Date of publication of application:
**31.07.2024 Bulletin 2024/31**

(73) Proprietor: **Fondazione Istituto Italiano di
Tecnologia
16163 Genova (IT)**

(72) Inventors:
• **DE PASCALI, Corrado
00128 Roma (RM) (IT)**

• **PALAGI, Stefano
55041 Camaiore (LU) (IT)**
• **NASELLI, Giovanna Adele
16145 Genova (GE) (IT)**
• **MAZZOLAI, Barbara
57012 Castiglioncello (LI) (IT)**

(74) Representative: **Bottino, Giovanni
ARBO Srl
Via Colombo, 11/29
16121 Genova (IT)**

(56) References cited:
**EP-A1- 0 219 327      EP-A2- 2 820 311
CN-A- 108 161 929    GB-A- 2 586 118
JP-U- 3 179 088        US-A1- 2013 186 265**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a fluidic artificial muscle device comprising at least one pleated actuator adapted to exert forces along an axis, said actuator comprising a chamber delimited by closing portions at the two opposite ends along said axis and by a flexible membrane in the central portion interposed to said closing portions, said membrane having a plurality of ridges and valleys that alternate with each other in a circumferential direction around said axis to form a pleated structure.

The field of the invention relates to fluidic artificial muscles, and more specifically to pneumatic artificial muscles, or PAMs.

The term Pneumatic Artificial Muscle (PAM) was born together with the first of its kind, the McKibben artificial muscle, created in the 1950s and commercialised only in the 1980s. The name of these pneumatic actuators derives both from the similarities with biological muscles and from their applications in the field of biomechanics.

PAMs are widely used in robotics, especially in applications that mimic human muscle behaviour such as humanoid robots, rehabilitation devices, systems for safe human-robot interaction, etc.

Different principle properties distinguish fluidic artificial muscles from other actuators:

- They contract (rather than extend) when put under pressure;
- They are light and have a high power/weight ratio;
- Since they normally work with compressed air (although, in principle, they can work with any fluid) and their main component is a deformable membrane, they show good yieldability and this can also be exploited for safe interactions with a human operator;
- Their yieldability allows them to act with a spring-type behaviour and to achieve fluid movements that mimic the behaviour of the biological muscle;
- Unlike motors, they do not require any type of power transmission or gears as they can be connected directly to the body to be operated.

PAMs and fluidic artificial muscles differ from other pneumatic actuators (e.g. bellows actuators) principally in that, counter-intuitively, they contract when pressurized and lengthen when depressurized. Since the ambient pressure is typically atmospheric, depressurization produces limited forces, and this means that the contraction forces obtained by depressurizing the bellows actuators are much lower than those obtainable by pressurizing the PAMs. PAMs are therefore the preferred choice to mimic the contraction of biological muscles. Since the first McKibben artificial muscles were introduced, several PAMs have been developed and, although they have different designs, their main operating principle is the same as the original McKibben actuators.

In fact, the PAMs are based on three main components: an elastic membrane, high tensile strength fibres and two rigid terminal closing elements. Sometimes the membrane is made of a composite material and already comprises the high tensile strength component, usually a fabric of fibres glued onto an elastomer seal layer.

The main operation principle of PAMs is based on the orthotropic characteristic of the composite membrane (or membrane together with fibres). When pressurized, the membrane tends to swell but the high tensile strength fibres that bind the membrane bind the radial expansion to an axial contraction.

The range of working pressures of PAMs depends greatly on their design and the materials involved.

PAMs with different designs have been developed primarily to reduce non-linear adverse effects affecting the original McKibben actuators, such as friction between the fibres and the membrane or elongation of the membrane during inflation, leading to non-linear behaviours, hysteresis, energy loss, and shorter actuator life.

PAMs are generally classified into four specific categories, primarily based on the different configuration of the outer fibre sheath relative to the membrane and are: braided muscles, cross-linked muscles, embedded muscles, and pleated PAMs.

EP 0219327 A1 describes a PAM provided with an air chamber and its actuator, which requires at least three different components (fibres, terminal connectors and air chamber of complex shape). The document indicates that the air chamber must have a well-defined shape with specially designed projections and in this way strongly restricts the scope of application of the idea. The described actuator must be assembled from different parts, including further linkage support structures, which limits its adoption in complex configurations. Finally, the described actuator cannot operate using depressurization and only contraction can be obtained.

The document "Conception and realization of pleated pneumatic artificial muscles and their use as compliant actuation elements," F. Daerden, Vrije Univ. Brussel, p. 176, 1999, introduces pleated PAMs. As with all PAMs, Pleated Pneumatic Artificial Muscles (PPAMs) described in this document do not function using a generic elastic membrane but require a composite membrane consisting of high tensile strength fibre fabric bonded to an inflatable elastomeric layer, with two rigid end closures. Each component of this type of PAM requires specific production processes and this hinders its production in series. The different components must be assembled and the actuator cannot be designed and built directly embedded in other structures or complex configurations. In addition to the material used, there are no specific design parameters to be modified to achieve the different performance desired. Only a theoretical mechanical model for the stress and deformation of the membrane is presented, which defines the design of the pleats to obtain a parallel zero stress condition. This model only describes the theoretical deformation of a generic membrane when it is pressurized, and neither fibres nor terminal closures are considered. More importantly, the model is not suitable as a practical design tool. Furthermore, the only deformable component is the membrane while the two terminal closures and the fibres are relatively rigid. Finally, this PAM can also only contract and work with positive pressure.

The document "Third-generation pleated pneumatic artificial muscles for robotic applications: Development and comparison with Mckibben muscle", D. Villegas et al., Adv. Robot., vol. 26, no. 11-12, pp. 1205-1227, 2012, describes an evolution of the early PPAMs. According to this version, the PPAM is lighter and uses an isotropic membrane, but the orthotropy of the structure is still achieved through different materials using high tensile strength fibres and an elastomeric membrane. The two terminal closing elements are partially 3D printed while the other components require other production techniques. The actuator is realized through a multistep process and requires subsequent assembly steps. The construction of this actuator within other structures or in complex installations, given its manufacturing, requires complex assembly steps. There are no specific design parameters to be modified to achieve different desired performance in addition to the component material. The only deformable component is the elastomeric membrane. This actuator can also only contract and work with positive pressure.

Document CN 108161929 A describes an artificial pneumatic muscle comprising exohedral-shaped elastic bodies driven by negative pressure and structured as if it were a pipe run by pressurized air. Through the differentiated design of the thicknesses of the transverse and longitudinal walls of each air chamber unit, the linear (unidirectional) displacement and the force of the elastic effect are manifested by the effect of the external negative pressure. When the effect of the external negative pressure disappears, the restoring elastic force and linear displacement occur which restore the natural state. Control of the linear displacement and elastic force of the pneumatic artificial muscle can be achieved by control of the negative inlet pressure. The pneumatic artificial muscle has a negative pressure pump, used as an air inlet source. Being driven in contraction by a negative pressure, the described PAM has a behaviour entirely similar to bellows actuators.

US 2007/129653 A1 describes a PAM capable of delivering bidirectional forces, comprising an actuator having an air chamber surrounded by a braided material mounted in parallel with an elastic spring. Two coaxial tubes with different diameters are provided in order to allow the surfaces to slide. When the muscle is pressurized with positive pressure with a pneumatic source, it expands, and its length increases while its width decreases, or vice versa. During the contraction cycle an internal positive pressure is activated by the air inlet, the elastic spring is compressed and stores energy until the next release, which corresponds to the release of the pressure in the air chamber. When the spring expands, it produces an expansion force. The contraction and expansion forces are controllable using a number of configurations, including changing the balance position of the elastic spring, using a different nominal air chamber, and using a different starting pressure. The weight of the artificial muscle is greater due to the presence of the springs. In addition to the weight, there is the disadvantage of a higher pneumatic impulse response time, due to the mechanics of the two coaxial cylinders and the springs.

Document WO 2016/207855 A1, by the same applicants, describes a PAM that incorporates the basic structure and functioning of the artificial muscles of the McKibben type and the like, which allows it to be operated both in contraction and extension. A hollow cylindrical chamber of resilient material is provided, which is inflated in the active phase. The chamber interacts with a braided sleeve, consisting of non-extensible wires, arranged according to crossed helical trajectories having a characteristic angle of inclination with respect to the longitudinal axis of the device. The sleeve is connected at the ends with two rigid head members provided to be mechanically connected to external bodies. Adjustment means are provided, associated with the rigid head members, adapted to vary the distance at rest, so as to require a proportional and consistent variation of the inclination angle so as to alternatively obtain an extension or a contraction in the active phase. This PAM requires complex and not easily scalable design and cumbersome assembly steps.

EP 2820311 A2 describes soft pneumatic actuators based on composites consisting of elastomers with structures incorporated with sheets or fibres, for example paper or fabric, which are flexible but not extensible. At pneumatic inflation, these actuators move anisotropically. The paper, when used to introduce anisotropy into the elastomers, can be easily folded into three-dimensional structures following the principles of origami: these folded structures increase the rigidity and anisotropy of the elastomeric actuators, while keeping them lightweight. The use of composite materials, terminal closures applied to a main membrane and pleats of complex shapes makes this pneumatic actuator difficult to build and prone to breakage and malfunctions. The document also describes lamps that use this structure so as to be able to expand and contract depending on the pressure applied internally, to thereby adjust the light emitted.

GB 2586118 A describes a pneumatic contractile device similar to a McKibben PAM, wherein two rigid terminal elements are coupled to the opposite ends of a main membrane pleated with a pyramidal module tessellation. Pyramidal module tessellation increases the complexity of the device and does not allow for use in extension but only in contraction.

The paper cites some geometric assessments to reduce stress concentrations in the material. However, the document does not indicate how to modify the geometry of the actuator to obtain specific contraction or extension behaviours. Document US2013/186265A1 discloses a pneumatic actuator made from a single material.

To summarize, the main disadvantages of known state-of-the-art PAMs are:

- They cannot be made embedded within more complex structures or made directly in multiple arrangements but must always be assembled and connected to the body to be operated, using additional support structures;
- The two zones where the membrane and the fibres (or the composite membrane) are bonded to the two rigid terminal closing elements are always high stress zones that tend to reduce the lifespan of the device;
- By design, all PAMs can actively deform mainly by contracting or stretching, but rarely are both behaviours obtained with the same design, and even in these cases the PAMs need a complex and not easily scalable model that also requires cumbersome assembly steps;
- The performance of the PAMs cannot be easily set at the design stage by means of the design parameters since, generally, the only parameters that can be modified are the length, diameter and configuration of the fibres of the outer sleeve.

The present invention aims at overcoming the above disadvantages in relation to the PAMs known in the art, and at obtaining a lightweight and simple to manufacture fluidic artificial muscle, which can operate in both contraction and extension, and which can be designed by using a geometric model that allows the device to achieve the expected performance.

The present invention achieves these objectives by means of a fluidic artificial muscle as described at the beginning, wherein said actuator moreover consists of a single member of a single flexible or elastic material, which material is isotropic and continuous.

In this way the said closing portions at the two ends and the flexible membrane in the central portion are constituted by a single body. This allows the manufacture of the device to be simplified as much as possible, avoiding the use of machinery dedicated to individual components and avoiding laborious assembly steps.

This also makes it possible to avoid friction or movement between different assembled components, which could separate or lead to breakage over time, and thus lengthen the device's operational life. The claimed invention makes it possible to overcome these disadvantages which also arise in devices known in the state of the art consisting of composite materials.

The presence of a plurality of ridges and valleys that alternate with each other in a circumferential direction around the axis allows use in contraction and extension unlike the bellows devices known in the state of the art. This configuration, in combination with the absence of separate closing portions and therefore with the single body of flexible, isotropic and continuous material, allows the deformation to be optimized during the operating phase of the device. Therefore, only one element is obtained, entirely functional in the contraction and extension thanks to its geometry.

According to an exemplary embodiment, said actuator is provided with at least three pleats.

In a further exemplary embodiment, the device comprises a plurality of said actuators, which actuators are linked to each other and/or are fluidly connected in series and/or in parallel to each other. Also in this case, multiple actuators and the means of reciprocal linkage can be formed by a single element.

This makes it possible to create even complex structures incorporating a plurality of actuators while maintaining a high degree of manufacturing simplicity.

The object of the present invention is also a method of manufacturing a fluidic artificial muscle device as described above, which method consists of a single-step process.

This allows full advantage to be taken of the unique body structure of the device to achieve high manufacturing simplicity.

In a first embodiment, said single-step manufacturing process is an additive manufacturing process.

In a second embodiment, said single-step manufacturing process is a moulding process.

According to one improvement, one or more of said actuators are manufactured together with a structure to be actuated and incorporated into the structure to be actuated.

This allows, in a single manufacturing step, realization not only of complex assemblies comprising multiple actuators as described above, but also incorporation of such assemblies, as well as a single actuator, within the structure to be actuated.

The object of the present invention is also a method of designing a fluidic artificial muscle device as described above, which method comprises the following steps:

a) defining a geometric model of said membrane, which geometric model includes a plurality of independent variables relating to geometric parameters;

b) defining an expected value of the contraction ratio and/or the elongation ratio and/or a combination of the contraction and elongation ratios;
c) identification of said optimal parameters to satisfy said expected value.

A combination of contraction and elongation ratios can be given for example by the sum of absolute values of contraction and elongation ratios, or by other linear or non-linear combinations of contraction and elongation ratios.

In one embodiment, said ridges are equal to each other and said valleys are equal to each other for all said pleats and the geometric model provides the following steps:

a1) defining each half-pleat of two profile curves of cross section with respect to said axis, wherein a first section curve has a concavity towards the chamber and a second section curve has a concavity in the opposite direction to the chamber;
a2) identifying a plurality of said independent variables relating to geometric parameters of said section curves;
a3) definition of three longitudinal profile curves with respect to the axis, with a crest curve, a valley curve and a boundary curve between said section curves;

and the said identification of said optimal parameters provides the following steps:

c1) definition of a specific objective function for contraction or extension, this objective function being a function of the volume of the chamber after deformation;
c2) identifying the variables of the minimization problem of said objective function as coordinates of predetermined points of said deformed longitudinal curves and length of the chamber along said axis;
c3) calculating the minimum of said objective function for different combinations of values of the parameters belonging to predetermined intervals and consequently determining the optimal set of parameters for maximizing the contraction ratio and/or the elongation ratio and/or a combination of the contraction and elongation ratios.

According to one embodiment said section curves are elliptical arcs.

This allows the section curves to be described only by means of their half-axes.

According to one embodiment said longitudinal curves are parabolas.

From the foregoing, the invention relates to a fluidic actuator consisting only of an unfoldable pleated membrane that can contract axially, i.e. longitudinally, by radial unfolding when inflated and can extend axially by radial folding when deflated. The ratio between contraction and elongation can be adjusted by modifying the design parameters resulting from the geometric model that describes the geometric transformations (folding or unfolding of the pleats) during inflation or deflation.

The actuators can be entirely deformable, as they do not require rigid terminal closing elements or high tensile strength fibres such as other PAM known in the art. This also means that there is no friction during operation, which reduces hysteresis and improves efficiency of the actuators.

Thanks to their single-component design, the actuators can be entirely manufactured with a one-step process, whether it is an additive manufacturing process (SLA, FDM, SLS, DLP, ...) or any other technique suitable for the manufacture of soft pneumatic chambers such as moulding.

The design of the actuators works well with a wide range of materials and can also be implemented using commercial materials and low-cost production devices. In contrast, most traditional PAMs can only be produced using specific techniques (e.g. Mckibben actuators require a braiding machine specially designed to braid the fibres around the pneumatic chamber at the specific angle required).

Using the geometric model mentioned above, it is possible to know the values of the required design parameters necessary to obtain specific performance in terms of contraction and elongation ratio. The design is fully scalable and the geometric model can also be used to know, a priori, the variation of performance depending on the desired changes in size.

Since the principle of operation is based primarily on geometry, the design can work with a wide range of materials. These have an effect on the required input pressure and obtainable output forces, as well as on specific properties such as yieldability.

Although the design can work with a wide range of materials, the best performance is achieved using materials such as TPU/TPE, silicone, rubber, or the like with a shore hardness range of 50A to 100A/45D. In fact, if the material is too soft (shore hardness < 50A), during contraction, the deformation of the membrane areas near the ends of the pleats increases and the actuator will tend to inflate instead of contract. On the other hand, if the material is too hard (shore hardness > 100A/45D), the pleats will not open easily.

The harder the material, the greater the pressure difference required to fold/unfold the actuator, the greater the forces generated by the contraction or extension of the actuator.

Since no additional rigid or heavy components are necessary, contrary to the prior art, the proposed actuators can be very light (prototypes of about 4 cm in length and 4 cm in average diameter made of materials of the Shore hardness range defined above have a weight of about

EP 4 405 137 B1

5-6 g while their versions downsized to 50%, have a weight of 1-2 g) and it is possible to achieve extremely high power/weight ratios, even if this is partially dependent on the material in question. Experimental tests on some prototypes have made it possible to see a 6g actuator that lifts 1kg for 20% of its length.

In fact, although the weight of the actuator depends on the material used and the design size chosen, it is relatively small as most of the actuator volume is filled with air due to the inner empty chamber.

Since the actuator is self-supporting even when under load and not actuated, it can be implemented both as an actuator and as a structural element within a more complex body.

This actuator can deform in both directions and not just contract like most PAMs. As seen at the beginning, PAMs known in the state of the art can generally only contract, and this is because they usually involve external fibres that can only generate contraction forces. In our case, since no external fibre is involved, the actuator can be deflated to achieve elongation. As already mentioned, the geometric model can be used to evaluate the design parameters of the actuator to obtain a specific ratio between elongation and contraction.

These and other features and advantages of the present invention will become clearer from the following description of some non-limiting examples illustrated in the accompanying drawings:

Fig. 1 illustrates an exemplary embodiment of the actuator according to the present invention;
Figs. 2a and 2b illustrate respectively a side view and section view of the actuator;
Fig. 3 illustrates the geometric model;
Fig. 4 illustrates the deformation of the actuator;
Fig. 5 illustrates the approximation of the internal volume;
Figs. 6, 7 and 8 illustrate the displacement as a function of geometric parameters;
Figs. 9a, 9b and 9c illustrate three different design examples of actuators optimised for different results;
Figs. 10a and 10b show an artificial finger actuated by three actuators;
Figs. 11a, 11b and 11c illustrate an exemplary embodiment of an actuator for torsional movements;
Figs. 12a, 12b and 12c illustrate an exemplary embodiment of an actuator for bending movements;
Figs. 13a, 13b and 13c illustrate an exemplary embodiment of an assembly of a plurality of actuators.

The invention relates to a fluidic artificial muscle device comprising at least one actuator 1 adapted to exert forces along an axis K in contraction or extension. The fluidic actuator 1 consists of a single structure, which can be manufactured in a single material by a one-step process, without assembly steps, and which can contract when pressurized by unfolding and extend when depressurized by folding.

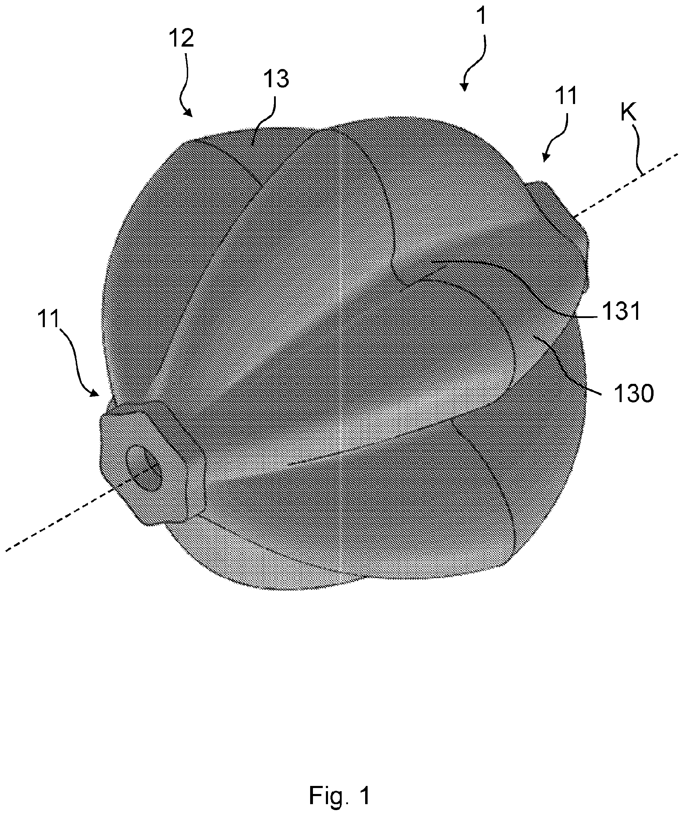

Figure 1 illustrates an exemplary embodiment of the actuator 1, which actuator 1 comprises a chamber 10 delimited by closing portions 11 at the two opposite ends along the axis K and by a flexible membrane 13 in the central portion 12 interposed to said closing portions 11. The membrane 13 has a plurality of ridges 130 and valleys 131 that alternate in the circumferential direction around said axis K to form a given number of pleats or lobes, from a minimum of three pleats to a maximum number depending on the maximum resolution obtainable by the adopted construction technique and the desired design diameter of the actuator 1 along the circumferential direction, since it is completely scalable. In the longitudinal direction, i.e. in the axial direction along the axis K, the pleats have curvilinear profiles, with the maximum corresponding to the central section of the actuator 1, and the minimums at the ends, i.e. at the closing portions 11.

The closing portions 11 are integral with the membrane 13 and consist of terminal thickenings of the same material. At least one closing portion 11 is provided with an inlet for supplying fluid to the chamber 10. Preferably the supply fluid is air, and the fluidic artificial muscle is a PAM. It is possible, however, to use any supply fluid.

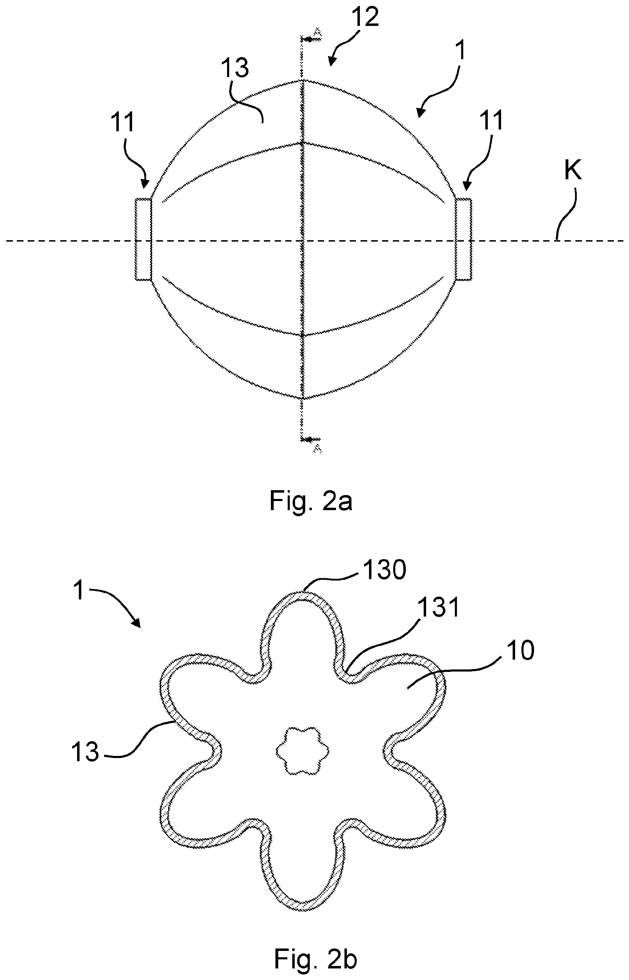

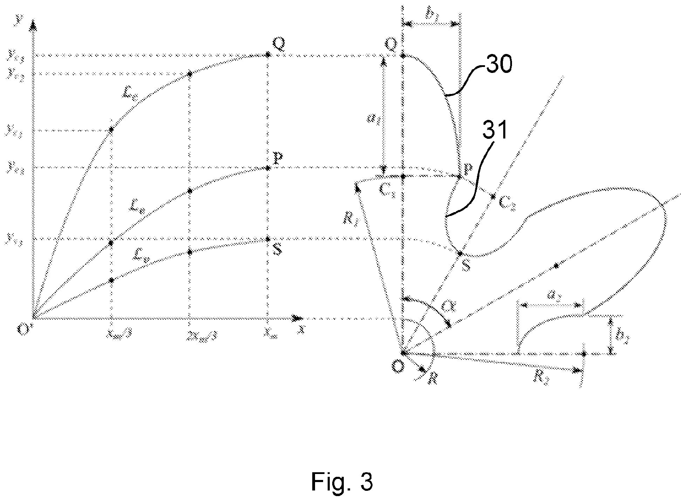

Figure 2a illustrates a side view of the actuator 1 and Figure 2b illustrates a cross-sectional view along the plane shown in Figure 3, i.e. in the central plane perpendicular to the axis K and equidistant with respect to the closing portions 11, defined as a central cross-section.

In this central cross-section, six pleats are visible, defined as the alternation of curvilinear profiles with inward and outward concavities. The ridges 130 and the valleys 131 are equal to one another for all the pleats of the membrane 13.

The design of the actuator 1 is generated by a geometric model, illustrated in Figures 3 to 8. The geometric model describes the shape of the actuator 1 by means of multiple design parameters and its geometric transformation during contraction or elongation.

The model can be used to fine-tune the performance of the actuator based on design (i.e. to improve its contraction or elongation) or to predict performance following changes in size. The design of the actuator 1 is dimensionless and its dimensions are constrained only by the production process chosen for each specific implementation.

Its operating principle is geometric, which means that it can be made of a wide range of materials, making the presented design suitable for working with different pressure ranges and, consequently, allowing different ranges of exerted forces to be obtained.

Figure 3 illustrates on the left a diagram of the longitudinal profiles and on the right a quarter of the central section for an actuator with six pleats ($x_m$ corresponds to half the length of the actuator 1, y corresponds to the radial distance from the K axis of the actuator 1)

Figure 3 shows the three main curves of a pleat (left) and a quarter of the central cross section (right). For each half-pleat, two cross-sectional profile curves are defined with respect to the axis K, of which a first section curve 30 has concavity towards the chamber 10 and a second section curve 31 has concavity in the opposite direction to the chamber 10. The first section curve 30 is constituted by the elliptical arc QP and the second section curve 31 is constituted by the elliptical arc PS.

The three main curves are longitudinal profile curves with respect to the axis, with a crest curve $\mathcal{L}_c$, passing through the point Q, a valley curve $\mathcal{L}_v$, passing through the point S, and a boundary curve $\mathcal{L}_e$, passing through the point P, that is, placed at the point of conjunction of the section curves 30 and 31.

The pleat may have any curvilinear section profile, not necessarily elliptical. Preferably, the geometric model implements elliptical arcs because these can be modelled by only two parameters (the half-axes), but different curves can also be taken into account. Here only one actuator 1 with six pleats is considered, however the design method and the geometric model according to the present invention are valid for any number of pleats greater than or equal to three. The number of pleats slightly influences the contraction/elongation and exerted forces as well as the deformation/stress of the material. High deformations and stresses can reduce the life span of the actuator 1.

The geometry of the actuator 1 is obtained from a loft of the cross section along a length which is half the total length of the actuator 1 ($L = L_{tot}/2$). The loft is carried out along the three longitudinal curves $\mathcal{L}_c$, $\mathcal{L}_v$ and $\mathcal{L}_e$. Preferably such curves are parabolic because, being simple curves such as circle and ellipse, they maximize the performance of the geometric model. However, any positive monotonous curvilinear profile can be implemented, provided that its concavity is directed towards the inner chamber 10 of the actuator 1.

The lengths of the longitudinal curves $\mathcal{L}_c$, $\mathcal{L}_v$ and $L_e$ are indicated here with $L_c$, $L_v$, and $L_e$.

The section is characterized by six parameters: the pairs of half-axes ($a_1$, $b_1$) and ($a_2$, $b_2$) and the distances $R_1$ and $R_2$. However, only four of these parameters are independent. In fact, for example, assuming $\{a_1, a_2, b_2, R_2\}$ as independent parameters, $b_1$ and $R_1$ are obtained as:

$$b_1 = R_2 \cos\frac{\pi - \alpha}{2} - b_2 \cos\frac{\alpha}{2}$$

$$R_1 = R_2 \sin\frac{\pi - \alpha}{2} + b_2 \sin\frac{\alpha}{2}$$

Once the number of pleats and the length $L_{tot}$ of the actuator 1 have been assigned, the objective of the geometric model is to find the optimal values of independent design parameters in such a way that the actuator 1 meets a certain requirement. The requirement can be any specific ratio of contraction and elongation between the possible ranges (approx. maximum 40%-45% contraction or elongation or the sum of their absolute value, i.e. 30% contraction and 10% elongation). Based on this, the average length and diameter are fixed so that prototypes can be easily made using 3D printers and the geometric model is used to find the three geometries that maximize contraction, elongation and their sum, keeping them almost equal (i.e. 20% contraction and 20% elongation). To find these geometries, the design parameters are treated as variables; for each given set $\{a_1, a_2, b_2, R_2\}$, the contraction ratio and the elongation ratio are calculated as solutions to an optimization problem, as explained below. Thereafter, all lengths are normalized to $L$.

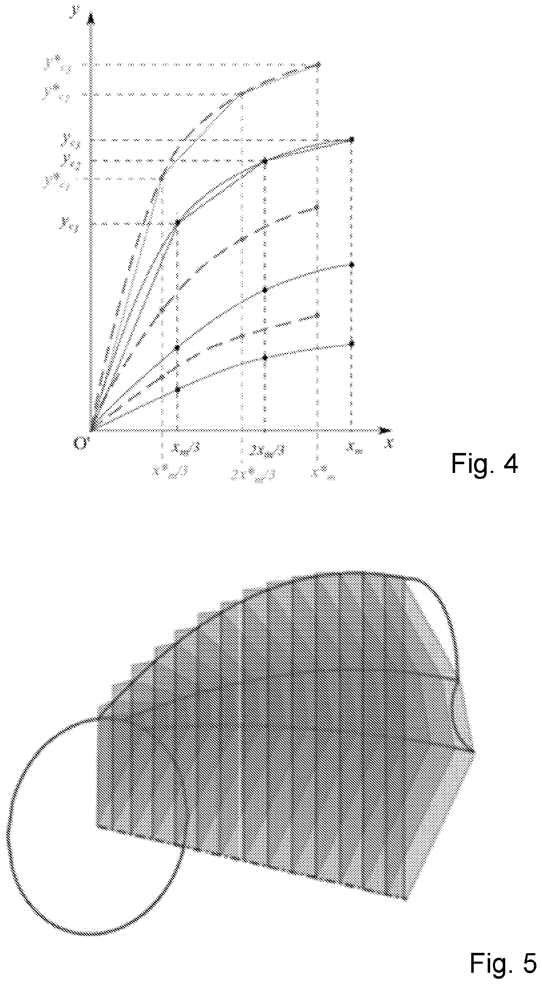

Figure 4 shows how the parabolic longitudinal curves $\mathcal{L}_c$, $\mathcal{L}_e$ and $\mathcal{L}_v$ move, if the actuator 1 is subject to the action of a positive pressure. The abscissa of the central section moves from $x_m$ to $x_m^*$; therefore, the contraction ratio is given by:

$$\rho_C = 1 - \frac{x_m^*}{x_m}$$

Conversely, in case of depressurization, the extension ratio may be obtained as:

$$\rho_E = \frac{x_m^*}{x_m} - 1$$

Due to normalization, here and in the following is $x_m = 1$. The calculation of the deformed configuration of the actuator 1 is carried out by posing an optimization problem. The objective function depends on the volume enclosed by the actuator 1. In the event that the actuator 1 is subjected to positive pressure, its volume increases; conversely, in the event of depressurization the internal volume tends to reach a minimum value. Then, with the volume being indicated by $V$, the objective function is:

$$f_C(X) = \frac{1}{V}$$

for an actuator 1 performing the contraction, while being

$$f_E(X) = V$$

for an actuator 1 performing the extension. In both cases, the minimum of the objective function must be found. The vector $X$ contains the variables of the problem: $X = \{y_{c1}^*, y_{c2}^*, y_{c3}^*, y_{e1}^*, y_{e2}^*, y_{e3}^*, y_{v1}^*, y_{v2}^*, y_{v3}^*, x_m^*\}$

The first nine variables represent the ordinates of the points in Figure 4. In this Figure, the parabolic longitudinal curves $\mathcal{L}_c$, $\mathcal{L}_e$ and $\mathcal{L}_v$ are moved from the initial position (solid lines) to the final position (dotted lines). The length of the actuator 1 decreases as it is pressurized.

The search for the minimum of the objective function is performed under geometric constraints. Under the assumption that the membrane 13 is inextensible, it is required that the lines $\mathcal{L}_c$, $\mathcal{L}_e$ and $\mathcal{L}_v$ maintain their constant length in any configuration of the actuator 1:

$$L_c^* = L_c$$

$$L_e^* = L_e$$

$$L_v^* = L_v$$

All the lengths are calculated by approximating the parabolic longitudinal curves $\mathcal{L}_c$, $\mathcal{L}_e$ and $\mathcal{L}_v$, with the dashed lines shown in Figure 4. The volume $V$ enclosed by the actuator 1 is calculated by approximation considering the solid line shown in Figure 5.

In addition to the set of equality constraints listed above, inequality constraints must be introduced in the geometric model. In any deformed configuration, it must be:

$$y_{c2}^* - y_{c3}^* < 0$$

$$y_{c1}^* - y_{c2}^* < 0$$

$$y_{c2}^* - 2y_{c1}^* < 0$$

$$y_{c3}^* - 2y_{c2}^* + y_{c1}^* < 0$$

The first pair of inequalities is set to ensure that $\mathcal{L}_c^*$ increases monotonously, while the other two ensure that its slope decreases from the end of the actuator 1 to the central cross-section. Similar expressions apply to $\mathcal{L}_v^*$ and $\mathcal{L}_e^*$.

Another set of constraints is needed to define the relationship between curves. In fact, in any configuration, $\mathcal{L}_v^*$ remains the closest to the longitudinal axis K of the actuator 1, $\mathcal{L}_c^*$ the furthest, while $\mathcal{L}_e^*$ is always between the two.

Then it is imperative:

$$y_{v_i}^* - y_{e_i}^* < 0$$

$$y_{e_i}^* - y_{c_i}^* < 0$$

for $i = 1,2,3$.

A last set of constraints is assigned to account for the non-extensibility of the elliptical arcs 30 and 31 in the cross section. It has been observed that defining this constraint in the form of equality leads to poor results in the calculation of the deformed configuration. To relax the constraint, it is introduced in the form of inequality as follows:

$$\sqrt{a_1{}^2 + b_1{}^2} < L_{ell_c}^* < L_{ell_c}$$

$$\sqrt{a_1{}^2 + b_1{}^2} < L_{ell_v}^* < L_{ell_v}$$

wherein the subscript refers to the elliptical arcs 30 and 31 in the cross section.

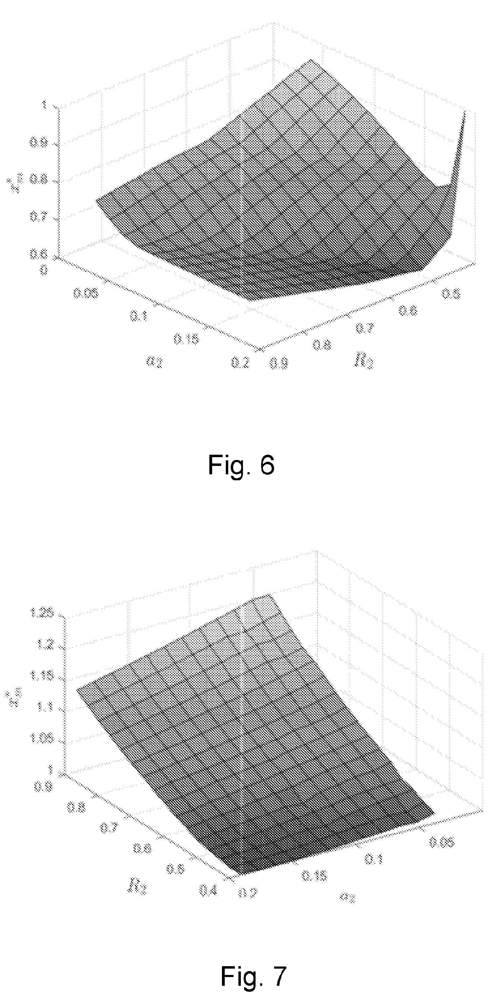

The geometric model implemented allows it to be investigated how the design parameters influence the contraction and extension ratios. Since the parameter space is four-dimensional, the results presented in Figures 6, 7 and 8 are displayed by treating two parameters as variables, keeping the other two constant. The results are obtained for the actuator 1 with $R = 0,2$, being $R$ defined as the radius of the end of the actuator 1 itself, indicated in Figure 3, on the right.

Figures 6 and 7 illustrate the displacement of the central cross-section of the actuator 1 in contraction (Figure 6) and extension (Figure 7) as a function of $a_2$ and $R_2$, for actuators having $a_1 = 0.38$ and $R_2 = 0.15$.

The surfaces in Figures 6 and 7 are obtained for actuators having $a_1 = 0.38$ and $b_2 = 0.15$. It is seen that the parameter $R_2$ plays an important role in the deformation of the actuator 1, both in contraction and in extension. Large values of $R_2$ allow the actuator 1 to perform a large extension, especially for small values of $a_2$: the longer the length $\mathcal{L}v$, the more the actuator 1 can extend under an applied negative pressure difference. As expected, such a combination of values is not suitable for constructing an actuator 1 with a high contraction ratio: Figure 6 shows that $x_m^*$ reaches the minimum (hence $\rho_c$ maximum) for a relatively low value of $R_2$ (~0.5) and for the higher value of $a_2$. In summary, those characteristics that are advantageous for the contraction of the actuator 1 are disadvantageous for the extension, and vice versa. While $R_2$ and $a_2$ are the only parameters that significantly affect the extension ratio, the contraction ratio is also affected by $b_2$.

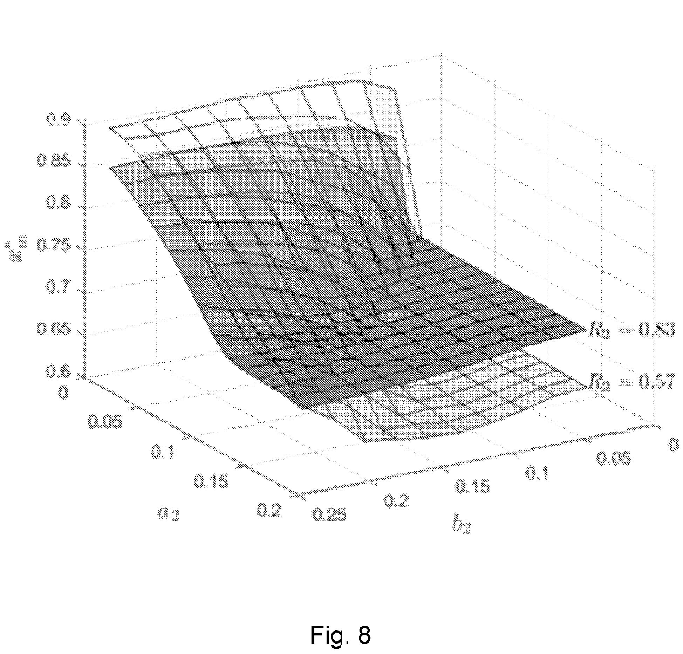

Figure 8 illustrates the displacement of the central section of two actuators with $a_1 = 0.43$ and $R_2 = 0.83$ (opaque surface) or $R_2 = 0.57$ (transparent surface). Figure 8 shows that, to maximize the contraction ratio, low values of $b_2$ are preferred if a low $a_2$ is adopted; furthermore, low values of $R_2$ allow the actuator 1 to perform a greater contraction only for pairs $(a_2, b_2)$ for which the surfaces have a plateau, while performing the opposite effect outside of such a plateau.

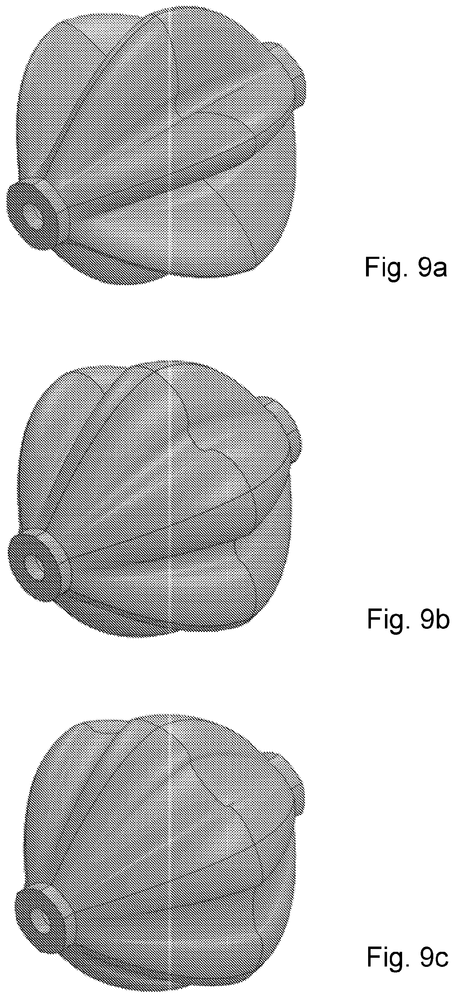

Figures 9a, 9b, and 9c illustrate embodiments of actuators optimized for different performance. The optimal parameter sets were determined for the three designs that maximize respectively the contraction (Figure 9a), the absolute displacement, that is the sum of elongation and contraction in absolute value (Figure 9b) and the elongation (Figure 9c). The relative parameters for the three embodiments, resulting from the model, are contained in the table below, in which all the values are normalized with respect to L representing half the length of actuator 1, i.e. $L_{tot}/2$.

| Parameter | Max $\rho_c$ | Max $\rho_e$ | Max $\rho_c + \rho_e$ |
|---|---|---|---|
| $a_1$ | 0.48 | 0.10 | 0.24 |
| $b_1$ | 0.17 | 0.26 | 0.29 |
| $R_1$ | 0.515 | 0.89 | 0.76 |
| $a_2$ | 0.16 | 0.06 | 0.09 |
| $b_2$ | 0.11 | 0.22 | 0.13 |

(continued)

| Parameter | Max $\rho_c$ | Max $\rho_e$ | Max $\rho_c + \rho_e$ |
|---|---|---|---|
| $R_2$ | 0.53 | 0.90 | 0.8 |

From these three main embodiments, it is possible to give a simplified explanation as to how the design parameters affect the contraction ratio and elongation ratio, and this applies to any number of pleats (considering at least three pleats) and to any curvilinear profile of the pleats, as mentioned above. The more the pleats are folded, the more the actuator will have a contraction ratio greater than the elongation ratio. On the other hand, the less pronounced the pleats are, the lower the contraction and the greater the elongation.

Any limitations resulting from the specific manufacturing process involved may be taken into account in the form of constraints in the mathematical model presented so far.

As already mentioned, since the actuator 1 can be made in a single step without any assembly phase, it is also possible to make complex configurations even having actuators incorporated into structures to be actuated.

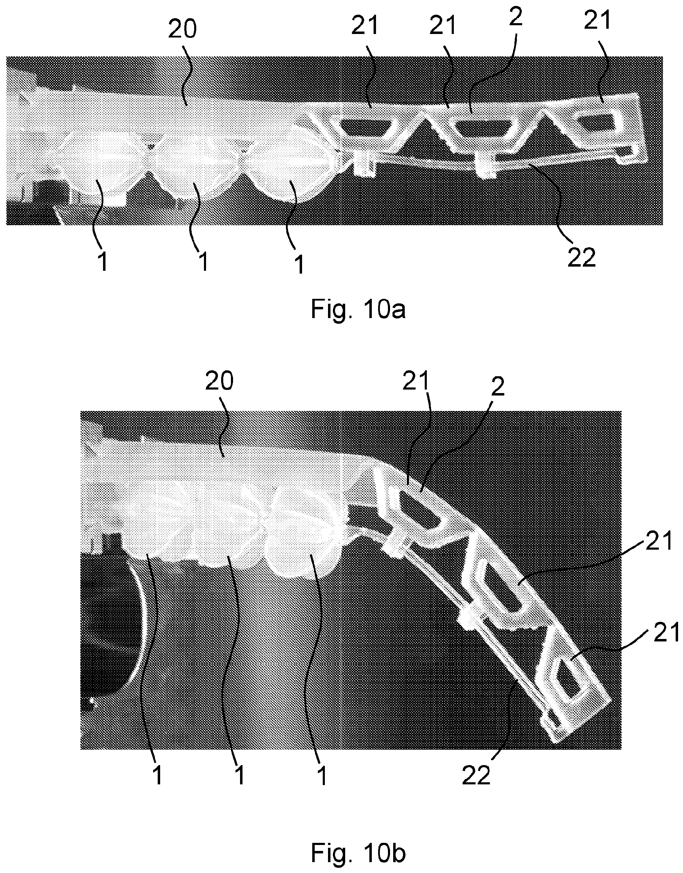

Figures 10A and 10b show an exemplary embodiment in which three actuators 1 are made directly embedded within the structure to be actuated. In this exemplary embodiment the structure to be actuated is an artificial finger 2, composed of a continuous structure made directly by 3D printing, in particular with the SLA technique, in a single-step process without any assembly step. There are three actuators 1 placed in series with each other. The finger 2 is composed of a metacarpal element 20 and three phalanx elements 21, all connected by bridges of material. The chain of phalanx elements 21 is implemented by folding with respect to the metacarpal element 20 by a linkage 22 operated by the actuators 1 in series, the actuators 1 being positioned at the metacarpal element 20. The finger 2 can be constructed in anthropometric dimensions, for example with actuators 1 each 2 cm long. Figure 10A shows the finger 2 in the rest position while Figure 10b shows the finger 2 bent, with the three actuators 1 pressurized and contracted.

It is possible to provide for forms of implementation which, in addition to the contraction and elongation, also exert bending and twisting.

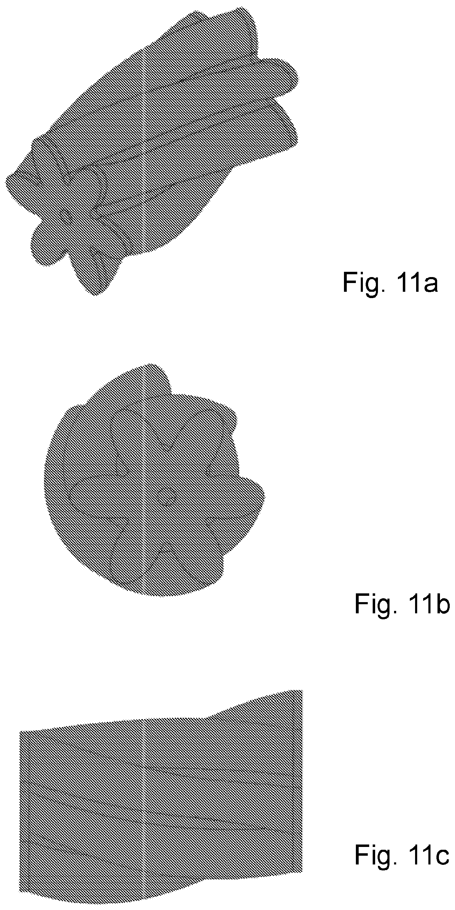

Figures 11a, 11b and 11c illustrate different views of an embodiment of actuator 1, in which a torque is obtained by slightly rotating the pleats of the membrane 13 with respect to the axis K of the actuator 1 with a helical pattern during the design phase. This allows the torsion of the actuator 1 to be added to the contraction and elongation when it is inflated or deflated.

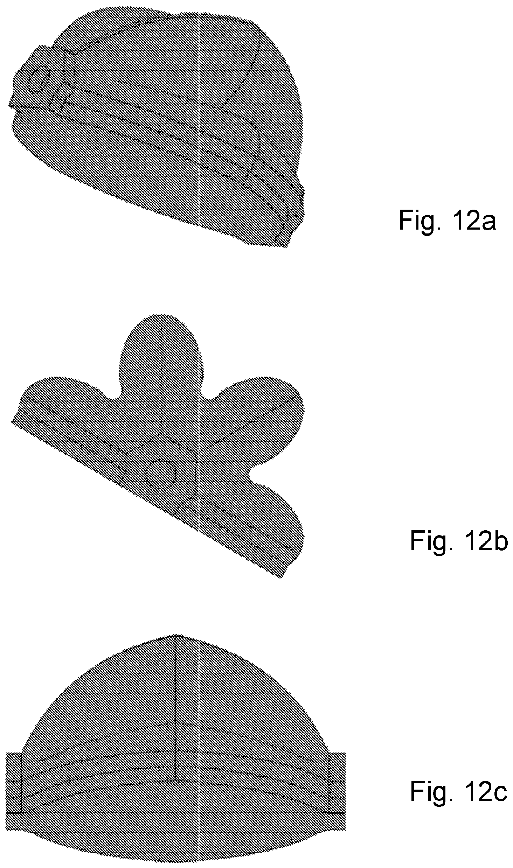

Figures 12a, 12b and 12c illustrate different views of an embodiment of actuator 1, in which a bending of the K axis is achieved during contraction. In this way, once the contraction has occurred, the opposite ends of the actuator will no longer lie on a straight line but on a curve. This effect is obtained by removing some pleats during the design phase to have a partial and asymmetrical fold pattern with respect to the axis K. In this way the side of the actuator 1 that has the pleats tends to contract or extend while the other part does not. This asymmetrical deformation leads to the bending of the actuator 1.

The device covered by the present invention also comprises one or more actuators 1 that can be manufactured directly in series, parallel or in other complex arrangements or even incorporated into the structure to be operated 2, as seen above.

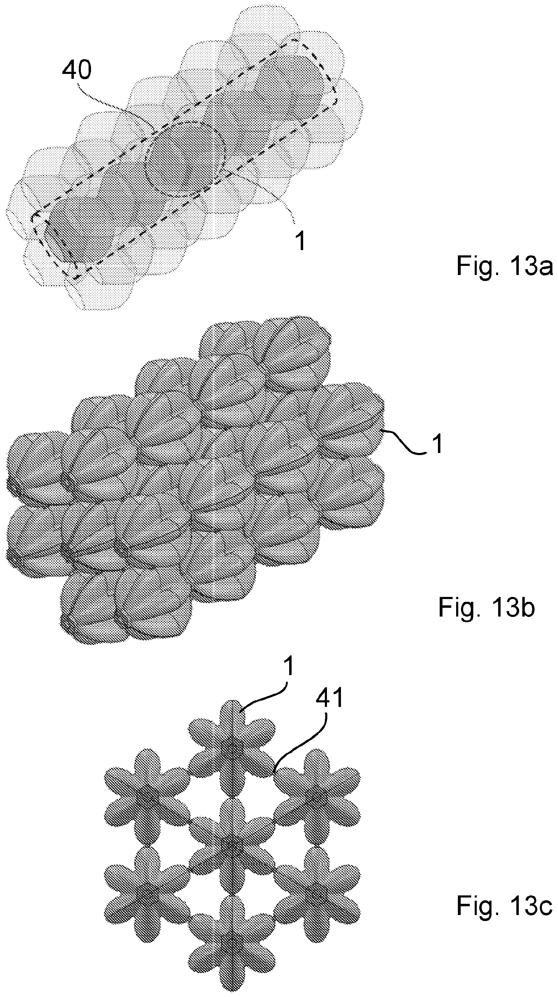

This makes it possible to obtain, for example, a hierarchical artificial muscle, illustrated in Figures 13a, 13b and 13c and manufactured as a single structure in a production process in a single step and composed of complex arrangements of the actuator 1.

This exemplary embodiment comprises a series of actuators linked together in parallel configuration using mutual constraint means consisting of radial connectors 41 to form an assembly to keep the deformations of the individual actuators 1 connected and to deform the entire structure as a single muscle. The radial connectors 41 may be internally hollow to share the air supply between all the actuators 1. In this way, even a single supply conduit is sufficient to operate the entire muscle. The executive example illustrated in Figures 13a, 13b and 13c refers to an artificial muscle that simulates the behaviour of the longitudinal biological muscles, but it is possible to modify the configuration to simulate the behaviour of different biological muscles, such as for example oblique muscles or radial muscles. These artificial muscles extend the advantages of the single actuator design 1 described above because by combining various actuators it is possible to obtain more deformations, multiply the force obtained and imitate different types of biological muscles, with the possibility also of producing the entire artificial muscle in a single process and using a single material. Figure 13a shows the main concept of hierarchical muscle as a complex arrangement of single actuators 1, consisting of multiple artificial muscle fibres 40, here in parallel configuration with each other, each in turn consisting of multiple actuators 1 in series.

The single-step manufacturing process of additive manufacturing can be of any type, for example the Fused Deposition Modeling (FDM) method and photopolymerization or stereolithography (SLA), with the use of different materials.

Importantly, not only can these two additive manufacturing processes be adopted, but any manufacturing process capable of producing a pneumatic chamber can be used.

The project from which the present patent application derives has received funding from the European Union's Horizon 2020 research and innovation program FETOPEN-2019-01, Grant agreement No. 863212.

**Claims**

1. Fluidic artificial muscle device comprising at least one pleated actuator (1) adapted to exert forces along an axis (K), said actuator (1) comprising a chamber (10) delimited by closing portions (11) at the two opposite ends along said axis (K) and by a flexible membrane (13) in the central portion (12) interposed to said closing portions (11), which membrane (13) has a plurality of ridges (130) and valleys (131) that alternate with each other in a circumferential direction around said axis (K) to form a pleated structure, wherein
   said actuator (1) consists of a single member of a single flexible or elastic material, which material is isotropic and continuous.

2. Device according to claim 1, wherein said actuator (1) is provided with at least three pleats.

3. Device according to claim 1 or 2, comprising a plurality of said actuators (1), which actuators (1) are linked to each other and/or are fluidly connected in series and/or parallel to each other.

4. Method of manufacturing a fluidic artificial muscle device according to one or more of the preceding claims, **characterized in that**
   the method consists of a single-step process.

5. Method according to claim 4, wherein said single-step manufacturing process is an additive manufacturing process.

6. Method according to claim 4, wherein said single-step manufacturing process is a moulding process.

7. Method according to claim 4, wherein one or more of said actuators (1) are manufactured together with a structure to be actuated (2) and incorporated into the structure to be actuated (2).

8. Method of designing a fluidic artificial muscle device according to one or more of claims 1 to 3, **characterized in that**
   it provides the following steps:

   a) defining a geometric model of said membrane (13), which geometric model includes a plurality of independent variables relating to geometric parameters;
   b) defining an expected value of the contraction ratio and/or the elongation ratio and/or a combination of the contraction and elongation ratios;
   c) identification of said optimal parameters to satisfy said expected value.

9. Method according to claim 8, wherein said ridges (130) are equal to each other and said valleys (131) are equal to each other for all said pleats and the geometric model provides the following steps:

   a1) definition for each half-pleat of two cross-sectional profile curves with respect to said axis (K), wherein a first section curve (30) has concavity towards the chamber (10) and a second section curve (31) has concavity in the opposite direction to the chamber (10);
   a2) identification of a plurality of said independent variables relating to geometric parameters of said section curves (30, 31);
   a3) definition of three longitudinal profile curves with respect to the axis (K), with a crest curve ($\mathcal{L}_c$), a valley curve ($\mathcal{L}_v$) and a boundary curve ($\mathcal{L}_e$) between said section curves (30, 31);
   and the said identification of said optimal parameters provides the following steps:

   c1) definition of a specific objective function for contraction or extension, this objective function being a function of the volume of the chamber (10) after deformation;
   c2) identification of the variables of the minimization problem of said objective function as coordinates of predetermined points of said deformed longitudinal curves and length of the chamber (10) along said axis (K);

c3) calculation of the minimum of said objective function and consequent determination of the optimal set of parameters for maximizing the contraction ratio and/or the elongation ratio and/or a combination of the contraction and elongation ratios.

10. Method according to claim 9, wherein said section curves (30, 31) are elliptical arcs.

11. Method according to claim 9 or 10, wherein said longitudinal curves ($\mathcal{L}_c$, $\mathcal{L}_v$, $\mathcal{L}_e$) are parabolas.

**Patentansprüche**

1. Fluidische künstliche Muskelvorrichtung, die mindestens einen gefalteten Aktuator (1) umfasst, der dazu ausgelegt ist, Kräfte entlang einer Achse (K) auszuüben, wobei der Aktuator (1) eine Kammer (10) umfasst, die durch Verschlussabschnitte (11) an den beiden gegenüberliegenden Enden entlang der Achse (K) und durch eine flexible Membran (13) im mittleren Abschnitt (12) begrenzt ist, die zwischen den Verschlussabschnitten angeordnet ist (11), wobei die Membran (13) eine Vielzahl von Rippen (130) und Tälern (131) aufweist, die sich in Umfangsrichtung um die Achse (K) abwechseln, um eine gefaltete Struktur zu bilden, wobei
der Aktuator (1) aus einem einzigen Element aus einem einzigen flexiblen oder elastischen Material besteht, wobei das Material isotrop und kontinuierlich ist.

2. Vorrichtung nach Anspruch 1, wobei der Aktuator (1) mit mindestens drei Falten versehen ist.

3. Vorrichtung nach Anspruch 1 oder 2, umfassend eine Vielzahl der Aktuatoren (1), wobei die Aktuatoren (1) miteinander verbunden und/oder fluidisch in Reihe und/oder parallel zueinander verbunden sind.

4. Verfahren zur Herstellung einer fluidischen künstlichen Muskelvorrichtung gemäß einem oder mehreren der vorstehenden Ansprüche,
**dadurch gekennzeichnet, dass**
das Verfahren aus einem einstufigen Prozess besteht.

5. Verfahren nach Anspruch 4, wobei der einstufige Herstellungsprozess ein additiver Herstellungsprozess ist.

6. Verfahren nach Anspruch 4, wobei der einstufige Herstellungsprozess ein Formungsprozess ist.

7. Verfahren nach Anspruch 4, wobei einer oder mehrere der Aktuatoren (1) zusammen mit einer zu betätigenden Struktur (2) hergestellt und in die zu betätigende Struktur (2) integriert werden.

8. Verfahren zum Entwerfen einer fluidischen künstlichen Muskelvorrichtung gemäß einem oder mehreren der Ansprüche 1 bis 3,
**dadurch gekennzeichnet, dass**
es die folgenden Schritte umfasst:

a) Definieren eines geometrischen Modells der Membran (13), wobei das geometrische Modell eine Vielzahl unabhängiger Variablen umfasst, die sich auf geometrische Parameter beziehen;
b) Definieren eines erwarteten Werts des Kontraktionsverhältnisses und/oder des Dehnungsverhältnisses und/oder einer Kombination aus Kontraktions- und Dehnungsverhältnissen;
c) Identifizieren der optimalen Parameter, um den erwarteten Wert zu erfüllen.

9. Verfahren gemäß Anspruch 8, wobei die Rippen (130) einander gleich sind und die Täler (131) einander für alle Falten gleich sind und das geometrische Modell die folgenden Schritte umfasst:

a1) Definition für jede Halbfalte von zwei Querschnittsprofilkurven in Bezug auf die Achse (K), wobei eine erste Abschnittskurve (30) eine Konkavität in Richtung der Kammer (10) aufweist und eine zweite Abschnittskurve (31) eine Konkavität in entgegengesetzter Richtung zur Kammer (10) aufweist;
a2) Identifizierung einer Vielzahl der unabhängigen Variablen, die sich auf geometrische Parameter der Abschnittskurven (30, 31) beziehen;
a3) Definition von drei Längsprofilkurven in Bezug auf die Achse (K) mit einer Scheitelkurve (), einer Tal-Kurve (

$\mathcal{L}v$) und einer Grenzkurve ($\mathcal{L}e$) zwischen den genannten Abschnittskurven (30, 31); und die genannte Identifizierung der genannten optimalen Parameter umfasst die folgenden Schritte:

c1) Definition einer spezifischen Zielfunktion für die Kontraktion oder Ausdehnung, wobei diese Zielfunktion eine Funktion des Volumens der Kammer (10) nach der Verformung ist;

c2) Identifizierung der Variablen des Minimierungsproblems der Zielfunktion als Koordinaten vorbestimmter Punkte der verformten Längskurven und Länge der Kammer (10) entlang der Achse (K);

c3) Berechnung des Minimums der Zielfunktion und daraus resultierende Bestimmung des optimalen Parametersatzes zur Maximierung des Kontraktionsverhältnisses und/oder des Dehnungsverhältnisses und/oder einer Kombination aus Kontraktions- und Dehnungsverhältnis.

10. Verfahren nach Anspruch 9, wobei die Abschnittskurven (30, 31) elliptische Bögen sind.

11. Verfahren nach Anspruch 9 oder 10, wobei die Längskurven ($\mathcal{L}c$, $\mathcal{L}v$, $\mathcal{L}e$) Parabeln sind.

## Revendications

1. Dispositif à muscle artificiel fluidique comprenant au moins un actionneur plissé (1) adapté pour exercer des forces le long d'un axe (K), ledit actionneur (1) comprenant une chambre (10) délimitée par des parties de fermeture (11) aux deux extrémités opposées le long dudit axe (K) et par une membrane flexible (13) dans la partie centrale (12) interposée entre lesdites parties de fermeture (11), laquelle membrane (13) comporte une pluralité de crêtes (130) et de creux (131) qui alternent les uns avec les autres dans une direction circonférentielle autour dudit axe (K) pour former une structure plissée, dans lequel

   ledit actionneur (1) est constitué d'un seul élément d'un seul matériau flexible ou élastique, lequel matériau est isotrope et continu.

2. Dispositif selon la revendication 1, dans lequel ledit actionneur (1) est pourvu d'au moins trois plis.

3. Dispositif selon la revendication 1 ou 2, comprenant une pluralité desdits actionneurs (1), lesquels actionneurs (1) sont reliés les uns aux autres et/ou sont connectés de manière fluide en série et/ou en parallèle les uns aux autres.

4. Procédé de fabrication d'un dispositif à muscle artificiel fluidique selon une ou plusieurs des revendications précédentes,
   **caractérisé en ce que**
   le procédé comprend une seule étape.

5. Procédé selon la revendication 4, dans lequel ledit procédé de fabrication en une seule étape est un procédé de fabrication additive.

6. Procédé selon la revendication 4, dans lequel ledit procédé de fabrication en une seule étape est un procédé de moulage.

7. Procédé selon la revendication 4, dans lequel un ou plusieurs desdits actionneurs (1) sont fabriqués conjointement avec une structure à actionner (2) et incorporés dans la structure à actionner (2).

8. Procédé de conception d'un dispositif à muscle artificiel fluidique selon une ou plusieurs des revendications 1 à 3,
   **caractérisé en ce qu'**
   il comprend les étapes suivantes :

   a) la définition d'un modèle géométrique de ladite membrane (13), lequel modèle géométrique comprend une pluralité de variables indépendantes relatives à des paramètres géométriques ;
   b) la définition d'une valeur attendue du rapport de contraction et/ou du rapport d'allongement et/ou d'une combinaison des rapports de contraction et d'allongement ;
   c) l'identification desdits paramètres optimaux pour satisfaire ladite valeur attendue.

9. Procédé selon la revendication 8, dans lequel lesdites crêtes (130) sont égales les unes aux autres et lesdites creux (131) sont égaux les uns aux autres pour tous lesdits plis et le modèle géométrique comprend les étapes suivantes :

a1) la définition, pour chaque demi-plis, de deux courbes de profil transversal par rapport audit axe (K), dans lequel une première courbe de section (30) présente une concavité vers la chambre (10) et une deuxième courbe de section (31) présente une concavité dans la direction opposée à la chambre (10) ;

a2) identification d'une pluralité desdites variables indépendantes relatives aux paramètres géométriques desdites courbes de section (30, 31) ;

a3) définition de trois courbes de profil longitudinal par rapport à l'axe (K), avec une courbe de crête ($\mathcal{L}c$), une courbe de creux ($\mathcal{L}v$) et une courbe limite ($\mathcal{L}e$) entre lesdites courbes de section (30, 31) ;

et ladite identification desdits paramètres optimaux comprend les étapes suivantes :

c1) définition d'une fonction objective spécifique pour la contraction ou l'extension, cette fonction objective étant une fonction du volume de la chambre (10) après déformation ;

c2) identification des variables du problème de minimisation de ladite fonction objective comme coordonnées de points prédéterminés desdites courbes longitudinales déformées et longueur de la chambre (10) le long dudit axe (K);

c3) calcul du minimum de ladite fonction objectif et détermination conséquente de l'ensemble optimal de paramètres pour maximiser le rapport de contraction et/ou le rapport d'allongement et/ou une combinaison des rapports de contraction et d'allongement.

10. Procédé selon la revendication 9, dans lequel lesdites courbes de section (30, 31) sont des arcs elliptiques.

11. Procédé selon la revendication 9 ou 10, dans lequel lesdites courbes longitudinales ($\mathcal{L}c$, $\mathcal{L}v$, $\mathcal{L}e$) sont des paraboles.

Fig. 1

Fig. 2a

Fig. 2b

Fig. 3

Fig. 4

Fig. 5

Fig. 6

Fig. 7

Fig. 8

Fig. 9a

Fig. 9b

Fig. 9c

Fig. 10a

Fig. 10b

Fig. 11a

Fig. 11b

Fig. 11c

Fig. 12a

Fig. 12b

Fig. 12c

40

1

Fig. 13a

1

Fig. 13b

1

41

Fig. 13c

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0219327 A1
- CN 108161929 A
- US 2007129653 A1
- WO 2016207855 A1
- EP 2820311 A2
- GB 2586118 A
- US 2013186265 A1

**Non-patent literature cited in the description**

- **F. DAERDEN**. Conception and realization of pleated pneumatic artificial muscles and their use as compliant actuation elements. Vrije Univ. Brussel, 1999, 176
- **D. VILLEGAS et al.** Third-generation pleated pneumatic artificial muscles for robotic applications: Development and comparison with Mckibben muscle. *Adv. Robot.*, vol. 26 (11-12), 1205-1227